# EUROPÄISCHE PATENTANMELDUNG

(11) **EP 1 153 721 A1**
(43) Veröffentlichungstag der Anmeldung: **14.11.2001**
(21) Anmeldenummer: 01110719.0
(22) Anmeldetag: 03.05.2001
(51) Int. Cl.: B29C 33/38

(54) **Verfahren zur Generierung von Werkzeugformen**

(30) Priorität: 10.05.2000 DE 10022870
(71) Anmelder: DaimlerChrysler AG, 70567 Stuttgart (DE)
(72) Erfinder: Shen, Jialin, Dr., 89134 Blaustein (DE); Wiedemann, Bernhard, Dr., 89077 Ulm (DE)

(57) **Zusammenfassung**

Die Erfindung betrifft ein Verfahren zur Generierung einer Werkzeugform, bei dem man in einem festen Formrahmen (2) einen Hohlraum bildet, der einem in der Form herzustellenden Bauteil entspricht. Gemäß der Erfindung füllt man den Formrahmen mit Ausnahme eines Bereiches, der sich in einem Abstand um den Hohlraum herum erstreckt, mit einer Vielzahl von Füllelementen (6) aus, die man mindestens einen im wesentlichen inkompressiblen Block bilden lässt. Anschließend setzt man ein Modell (8) des herzustellenden Bauteils in die Form und füllt den Zwischenraum zwischen dem Modell und den Füllelementen mit einem Maskenmaterial (10).

## Beschreibung

Die Erfindung betrifft ein Verfahren zur Generierung einer Werkzeugform, bei dem man in einem festen Formrahmen einen Hohlraum bildet, der einem in der Form herzustellenden Bauteil entspricht.

Werkzeugformen haben einen großen Anteil an massiven Volumen, welches wesentlich größer als das Volumen des Hohlraums für das herzustellende Bauteil ist, bei normalem Aufbau aber mit gebaut werden muss. Es ist zwar bekannt, für den voluminösen Teil separate Formeinsätze zu verwenden. Diese muss man aber jedes Mal neu herstellen, zum Beispiel durch Fräsen oder Formen.

Die in Patentanspruch 1 angegebene Erfindung ermöglicht es, Werkzeugformen schneller und mit weniger Aufwand herzustellen.

Als Füllelemente, mit denen der feste Formrahmen mit Ausnahme des hohiraumnahen Bereiches ausgefüllt werden, verwendet man in einer ersten Ausführungsform des Verfahrens viele regelmäßig geformte Bausteine aus festem Material. Damit die Bausteine fest zusammenhalten, können sie Vorsprünge und/oder Ausnehmungen aufweisen, die formschlüssig ineinander bzw. in die Innenseite des Formrahmens eingreifen. Alternativ oder zusätzlich kann man die Bausteine aus einem ferromagnetischem Material bilden, in dem man einen magnetischen Fluss erzeugt, der sie zusammenhält, zum Beispiel durch einen Elektromagneten, der außen am Formrahmen angebracht ist.

Da die regelmäßig geformten Bausteine immer wieder verwendet werden können, genügt eine relativ geringe Menge dieser Bausteine. Die eigenlichen Masken, die man auf irgendeine konventionelle Art herstellt, benötigen nur wenig Lagerplatz.

In einer zweiten Ausführungsform des Verfahrens verwendet man als Füllelemente unregelmäßig geformte Partikel mit einem mit verfestigbaren Bindemittel, zum Beispiel aushärtbaren Sand. Wenn das Bindemittel wasserlöslich ist, kann man den Sand wiederaufbereiten und wiederverwenden.

Das erfindungsgemäße Verfahren eignet sich besonders zur Generierung von Werkzeugformen für die Herstellung von Feingussmodellen, z.B. Wachsmodellen, sowie zur Generierung von Werkzeugformen für den Kunststoffspritzguss.

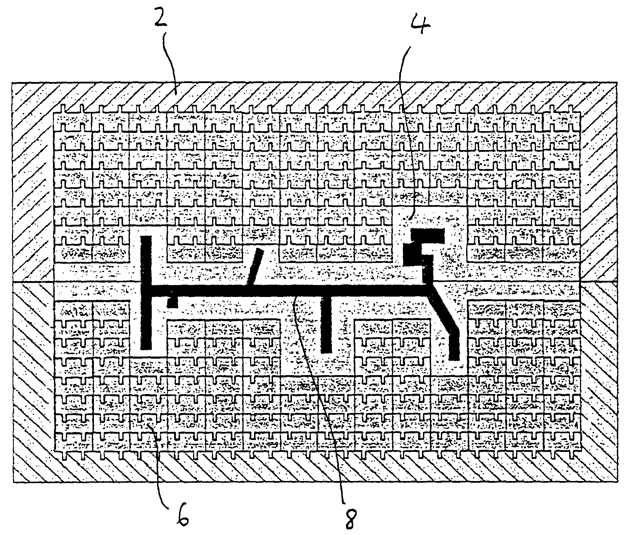

Weitere Merkmale und Vorteile der Erfindung ergeben sich aus der folgenden Beschreibung zweier Ausführungsbeispiele und aus der Zeichnung, auf die Bezug genommen wird. Deren einzige Figur zeigt einen Formrahmen, der bis auf einen Hohlraum und ein Maskenmaterial rings um den Hohlraum mit vielen kleinen Füllbausteinen ausgefüllt ist.

In beiden Ausführungsbeispielen verwendet man einen geteilten festen Formrahmen 2, der zum Beispiel ein gefräster Kasten aus Stahl ist. Darin wird mittels eines Maskenmaterials 4 ein Hohlraum abgegrenzt, der später mit einem Werkstoff ausgegossen wird, um ein Bauteil herzustellen.

Eine veränderliche Formmaske wird im ersten Ausführungsbeispiel gebildet, indem man passende Füllbausteile 6 in den Formrahmen 2 setzt. Die Füllbausteine 6 sind kleine Quader mit im wesentlichen gleichen Abmessungen, mit denen der Formrahmen 2 praktisch lückenlos ausgefüllt werden kann. Die Füllbausteine 6 werden jeweils vom Boden der beiden Hälften des Formrahmens 2 aus eingesetzt und so hoch aufgeschichtet, dass ein massiver Block nachgebildet wird, der sich in einem Abstand um das herzustellende Bauteil herum erstreckt.

Die Füllbausteine 6 weisen Vorsprünge und Ausnehmungen auf, mit denen sie formschlüssig ineinander greifen, und die Vorsprünge der Füllbausteine 6, die sich jeweils am Boden des Formrahmens 2 befinden, greifen in entsprechende gleich beabstandete Ausnehmungen im Formrahmen 2 ein. Im Ausführungsbeispiel sind die Vorsprünge und Ausnehmungen zylindrische Zapfen und Löcher, mit denen sich die Füllbausteine 6 klemmend aneinander stecken lassen, ähnlich wie zum Beispiel bei Lego® -Steinen.

Wenn die Füllbausteine 6 aus ferromagnetischem Metall bestehen, kann man sie statt durch die beschriebenen Vorsprünge und Ausnehmungen oder zusätzlich dadurch befestigen, dass man einen Elektromagneten außen am stählernen Formrahmen 2 montiert und einschaltet.

Nach dem Aufbau der veränderlichen Formmaske wird ein Abformmodell 8 des herzustellenden Bauteils im Formrahmen 2 positioniert, und der Zwischenraum zwischen dem Abformmodell 8 und den Füllbausteinen 6 wird mit einem Maskenmaterial 10 gefüllt.

Zur Herstellung einer Werkzeugform für die Herstellung von Feingussmodellen verwendet man ein nicht kompressibles Elastomermaterial als Maskenmaterial 10. Nach Entfernung des Abformmodells 8 ist das Werkzeug fertig. Die Elastizität des Maskenmaterials 10 ermöglicht es, die Elastomermaske zerstörungsfrei von einem fertigen Wachsbauteil zu entfernen. Um dies zu erleichtern, kann die Elastomermaske an kritischen Stellen geschlitzt sein.

Tatsächlich gibt es keine absolut inkompressiblen Elastomermaterialien. Daher geht die Dicke des Elastomermaterials in die Genauigkeit der Bauteile ein. Mit der beschriebenen veränderlichen Formmaske kann man die Dicke des Elastomermaterials sehr gering halten, so dass die Genauigkeit erhöht wird, ohne dass man jedesmal eine spezielle Stützform herstellen und lagern muss. Nur die Maske selbst muss aufbewahrt werden, und wenn neue Wachsbauteile herzustellen sind, baut man die entsprechende Stützstruktur einfach wieder aus den Füllbausteinen 6 auf.

Da der Formrahmen 2 mit den wiederverwendbaren Füllbausteinen 6 füllbar ist, kann man ihn an die Maschinengröße anpassen und für die verschiedensten Teile verwenden.

Zur Herstellung einer Werkzeugform für den Kunststoffspritzguss mit der oben beschriebenen veränderlichen Formmaske verwendet man ein starres Maskenmaterial 10, das nach irgendeinem bekannten "Rapid-Tooling"-Verfahren wie z.B. 3D-Keltool® , DMLS® und RapidSteel® hergestellt wird. Zum Beispiel wird ein Abformmodell mit Silikon abgeformt, und im Silikon wird ein Gemisch aus Metallpulver und Bindemittel abgeformt. Dieses wird angesintert, um das Volumen zu fixieren, und anschließend wird Kupfer infiltriert.

In einem zweiten Ausführungsbeispiel wird der voluminöse Teil im Formrahmen 2 durch aushärtbaren Formsand statt durch die Füllbausteine 6 gebildet. Zunächst wird das Abformmodell 8 mit beispielsweise Knetmasse aufgedickt und in einer Hälfte des Formrahmens 2 positioniert. Anschließend gießt man den Sand in die Form und entfernt das Abformmodell 8. Gegebenenfalls kann man hier die Vakuumsacktechnik anwenden, um den Sand zusätzlich zu verdichten. Danach wird eine Vernetzungsreaktion initiiert, z.B. durch chemische oder thermische Aktivierung. Um Sandkörner miteinander zu verbinden, kann man sowohl vernetzbare Bindemittel (z.B. Phenolharze) als auch wasserlösliche Bindemittel (PVP) verwenden. In Falle des PVP kann man den Sand auf einfache Weise wieder verwerten.

Anschließend kann man den Zwischenraum zwischen dem Abformmodell 8 und dem ausgehärteten Füllsand mit einem Elastomermaterial füllen, um eine Werkzeugform für die Herstellung von Feingussmodellen herzustellen. Der ausgehärtete Formsand hält bekanntlich einem großen Druck stand. Somit hat man die Möglichkeit, eine nahezu konstante Dicke der Elastomermaske zu halten, wodurch eine höhere Genauigkeit erreicht wird.

Auch im zweiten Ausführungsbeispiel kann man mittels einer "Rapid-Tooling"-Technik eine Werkzeugform für den Kunststoffspritzguss herstellen

## Patentansprüche

1. Verfahren zur Generierung einer Werkzeugform, bei dem man in einem festen Formrahmen einen Hohlraum bildet, der einem in der Form herzustellenden Bauteil entspricht, **dadurch gekennzeichnet, dass** man den Formrahmen (2) mit Ausnahme eines Bereiches, der sich in einem Abstand um den Hohlraum herum erstreckt, mit einer Vielzahl von Füllelementen (6) ausfüllt, die man mindestens einen im wesentlichen inkompressiblen Block bilden lässt, ein Modell (8) des herzustellenden Bauteils in die Form setzt und den Zwischenraum zwischen dem Modell und den Füllelementen mit einem Maskenmaterial (10) füllt.

2. Verfahren nach Anspruch 1, **dadurch gekennzeichnet, dass** die Füllelemente regelmäßig geformte Füllbausteine (6) aus festem Material sind.

3. Verfahren nach Anspruch 2, **dadurch gekennzeichnet, dass** die Füllbausteine (6) und/oder die Innenseite des Formrahmens (2) mit Vorsprüngen und/oder Ausnehmungen versehen sind, die man formschlüssig ineinander greifen lässt, um den mindestens einen Block zu bilden.

4. Verfahren nach Anspruch 2 oder 3, **dadurch gekennzeichnet, dass** die Füllbausteine (6) aus ferromagnetischem Material bestehen, in dem man einen magnetischen Fluss erzeugt, um den mindestens einen Block zu bilden.

5. Verfahren nach Anspruch 1, **dadurch gekennzeichnet, dass** die Füllelemente unregelmäßig geformte Partikel mit einem Bindemittel sind, das man fest werden lässt, um den mindestens einen Block zu bilden.

6. Verfahren nach Anspruch 5, **dadurch gekennzeichnet, dass** die unregelmäßig geformten Partikel Sand sind.

7. Verfahren nach Anspruch 5 oder 6, **dadurch gekennzeichnet, dass** das Bindemittel wasserlöslich ist.

8. Verfahren nach einem der vorhergehenden Ansprüche, zur Generierung einer Werkzeugform für die Herstellung von Feingussmodellen.

9. Verfahren nach einem der Ansprüche 1 bis 7, zur Generierung einer Werkzeugform für den Kunststoffspritzguss.
